# EUROPEAN PATENT SPECIFICATION

(11) **EP 2 916 189 B1**
(45) Date of publication and mention of the grant of the patent: **08.05.2019**
(21) Application number: 14158174.4
(22) Date of filing: 06.03.2014
(51) Int. Cl.: G05B 19/418

(54) **Quality assured manufacturing**
Qualitätsgesicherte Herstellung
Fabrication de qualité contrôlée

(43) Date of publication of application: 09.09.2015
(73) Proprietor: Hexagon Technology Center GmbH, 9435 Heerbrugg (CH)
(72) Inventor: Pettersson, Bo, L-1279 Luxembourg (LU); Siercks, Knut, CH-9402 Mörschwil (CH); Zebhauser, Benedikt, CH-9400 Rorschach (CH)
(74) Representative: Kaminski Harmann

(56) References cited:
- US-A1- 2002 038 159

## Description

The present invention also relates generally to a tool location system in a manufacturing environment according to claim 1 and to a method of locating a handheld tool in a manufacturing environment according to claim 12.

The present invention relates to the field of art of manufacturing environments, such as e.g. in car body manufacturing, airplane manufacturing, machinery manufacturing or the like. Such environments are often arranged as assembly lines or as manufacturing cells.

An autonomous industrial robot for a manufacturing environment is shown in US 2011/087,360, which is equipped with a camera and a force sensor. A computing device is embodied in such a way to compute a desired robot motion based on camera and sensor data, so that the robot can automatically assemble a part to a predetermined location on a randomly moving workpiece, e.g. a tire to a car body.

Beside automated steps executed by robots, there are many steps in such a manufacturing, which involve manual handling and mounting. Those manual manufacturing steps are often done by means of a handheld tool, for example like a screwdriver, a wrench, a crimping tool, a rivet tool, a drill, a glue dispenser, etc. Preferably the tool is a power tool, which can for example be driven by electricity or air pressure. Many manufacturing steps are carried out by human workers as it does not make good economic sense to be fully automated. Still, human workers can be a potential source of mistakes, inaccuracies, overlooks or other human error. Therefore, techniques were developed to minimize such human errors.

JP 2000 111 450 shows an assembly line where the manufacturing steps at each assembly station are recorded by a camera. At an inspection stage, the recorded work documentation and a reproduced content of the assembly manual is provided on split screen display, so a human inspector is able to check the work.

In the examples of WO 2010/053422 or WO 2012/107300 or US 2015/0038159 there are systems for a positional location of movable tools and/or assembly goods in a production or assembly environment, which is done by a local GNSS like radio communication system, which is sometimes also referred to as RTLS or RFID-location. Those systems are based on Ultra Wide Band (UWB) radio communication. The environment is equipped with multiple stationary RF-sensors at known locations and the tool is equipped with a corresponding active electronic tag. Dependent on the thereby determined, three dimensional working position, it can be assured that the assembly is done correctly - e.g. at the correct location, with the correct tool, in the correct quantum, with the correct tool parameters and if e.g. the desired tightening level results were achieved. An Implementation of an UWB system tends to be tricky in view of potential interferences with wireless communication systems, which are getting more and more predominant in production environments. Also, regulatory limits (like FCC) have to be considered, which limits the achievable performance. As mentioned in the above cited documents, also shielding effects of the UWB-links, signal reflections, multi-path and scattering problems or other disturbances limits the practical usability and performance of such a system. Therefore, the guaranteed practically achievable positional accuracy of such systems is about 50 cm, which is very inaccurate in comparison to the tolerances at the workpiece to be manufactured. In most cases it is not possible to reliably distinguish the tool location with an accuracy corresponding to the spacing of the tightening points.

In WO 00/17719, an image pick-up device which picks up an image of a predetermined processing area is used, which can be aided by an image pick up device in or at a processing tool. The images are evaluated by pattern perception to determine that an operator carries out a predetermined number of processing operations without leaving out any processing points on a workpiece.

A disadvantage of those prior art designs is that the location accuracy of e.g. about 50 cm is only sufficient for a segmentation into rough working areas - which can help avoiding some severe errors (e.g. by locking the tools outside a roughly defined environment range), but which is not sufficient to ensure high quality standards.

In addition, the prior art systems suffer from the fact that they are very static regarding the production environment. Also, their setup requires installing dedicated infrastructure. In view of an ever changing manufacturing environment, product variants and flexible, order-oriented production, the prior art systems have to track every change in the product or environment and each tracked change has to be mapped into those systems by reprogramming or the like.

It is therefore an object of the present invention to improve a manufacturing process, in particular to improve a quality assurance and documentation system for the production process.

It is a particular object to improve the flexibility of a manufacturing environment where human workers operate with handheld tools, in particular in view of variations of the manufacturing environment (like changes in the surrounding by moving workers, variable supply stocks, mobile supply carts, service and maintenance personal and equipment, etc.) .

It is also a particular object to improve the flexibility of such a system, in particular in view of variations of the manufactured product, like different products, models or versions, modifications, improvements, customizable options, etc.

Another object is to provide a system which can easily be used in an established manufacturing environment, preferably requiring none or hardly any physical changes and/or mountings in the environment or an installation of dedicated infrastructure.

Those objects are achieved by realising the features of the independent claims. Features which further develop the invention in an alternative or advantageous manner are described in the dependent patent claims.

According to the present invention, a tool location system for a handheld tool in a manufacturing environment is established. In the manufacturing environment, a workpiece is manufactured by usage of those handheld tools, in particular at multiple manufacturing stations such as in a car body, airplane or machinery production at an assembly line or in manufacturing cells.

The manually movable tool is equipped with a camera for capturing images, which are provided to the location system. The location system comprises numerical evaluator means such as a computational unit, which is built to determine a tool-location of the tool by a simultaneous location and mapping (SLAM) navigation calculation based on those images from the camera.

By the static manufacturing environment, a global coordinate system is defined in relation to it. According to the invention, the tool-location is determined with respect to a global coordinate system in relation to the environment by the SLAM navigation, based on portions of the images from the camera, which comprise a view of the manufacturing environment.

Also, the workpiece defines a local coordinate system in relation to it. In particular, the local coordinate system can be moving with respect to the global coordinate system, e.g. in an assembly line arrangement. According to the invention, the tool-location is determined with respect to a local coordinate system in relation to the workpiece by the SLAM navigation, based on portions of the images from the camera which comprise a view of the workpiece.

If the actual view of the camera only comprises a portion of the environment and no portion (or at least no reasonable portion) of the workpiece, the tool-location can accordingly only be determined in the global coordinate system.

If the actual view of the camera only comprises a portion of the workpiece and no portion (or at least no reasonable portion) of the environment, the tool-location can accordingly only be determined in the local coordinate system.

If the actual view of the camera comprises a portion of the environment and a portion of the workpiece, the tool-location is determined in the global and in the local coordinate system based on images from the same camera. The camera can have a field of view comprising at least a part of an operating range of the tool.

Therein, the determination of the tool-location can involve a matching of the SLAM navigation with known spatial information of the workpiece and/or the environment, in particular of spatial information in form of CAD or pointcloud data.

The evaluator means can be built to establish a seamless transition of the tool-location between the local coordinate system and the global coordinate system, in particular with a live-updated referencing of the local coordinate system with respect to the global coordinate system.

The tool can in particular be a mounting tool, for example a screwdriver tool, a wrench tool, a clamping tool or rivet-tool, preferably a torque- and/or position-monitored power tool. The tool can also comprise an inertial measurement unit (IMU) and the determination of the tool-location can involve information derived by an inertial navigation algorithm based on data from the IMU.

The tool can further comprise a sensor means for sensing a work process parameter of the tools operation. This work process parameter can be provided together with the corresponding tool-location as tool-surveillance data by the communication interface, in particular to a manufacturing management system for management and or documentation of a manufacturing history of the workpiece, preferably wherein the tool-surveillance data comprises an image from the camera depicting a work process result of the tools operation.

In addition the tool can comprise a communication interface, in particular a wireless communication interface, preferably a real time communication interface, which is built to exchange its localization and/or image information with a manufacturing management system and/or other tools.

The manufacturing environment and/or the workpiece can comprise multiple cooperative and or actively light emitting targets built to be identified in the camera image, in particular contrast faces, reflectors or LEDs, which can be used to support the SLAM navigation.

The workpiece can be movable with respect to the global coordinate system and can also be equipped with a camera for a SLAM navigation of a workpiece-location in the global coordinate system, in particular in the same way as the tool-location is done, in particular wherein the workpiece-location and the tool-location are combined, preferably whereby a referencing of the global coordinate system and the local coordinate system is established. Therein, a back-referencing between the tool-location and the workpiece location can be established by a location of the tool based on images from the camera at the workpiece and a location of the workpiece based on images from the camera at the tool.

The invention also relates to a tool surveillance system for a manufacturing environment, wherein the manufacturing environment comprises stationary items and movable items. The movable items are comprising a workpiece to be manufactured and/or parts thereof and a tool to be handled by a human worker. The tool surveillance system also comprises a tool location system for the tool of the worker as described herein.

In the tool surveillance system, the manufacturing environment can be equipped with multiple global cameras for imaging the manufacturing environment, in particular stationary global cameras, and an image processing means built to identify/detect the stationary and movable items in the manufacturing environment and to determine their global positional coordinates in a global environment coordinate system, in particular in at least three dimensions. Therein, the global positional coordinates can be matched with the determined tool-location, in particular wherein a back-referencing between the tool-navigation and the environment-navigation is established by a global location of the tool with the camera at the environment and a global location of the tool with respect to the environment with the camera at the tool.

The camera can be a 2D photosensitive means transforming optical radiation into eclectic signals, preferably with a two dimensional matrix arrangement of photosensitive cells, and having optics for imaging a field of view onto the photosensitive means. Examples are CCD or CMOS cameras, preferably wherein a captured image is digitized and provided as digital image or video data for further processing.

Simultaneous Localization and Mapping (SLAM) techniques (sometimes also VSLAM - for Visual SLAM) subsume strategies, wherein images from preferably a single camera are used not only autonomously identify previously unknown features within the images, but also to derive the cameras location based on the images and to generate a 3D map of the imaged surrounding. For example, US 8,274,406 or US 2012/121,161 show exemplary embodiments of the usage of Simultaneous Localization and Mapping (SLAM) techniques for robot navigation by the usage of vision systems. To achieve SLAM navigation, the camera is moved with respect to the imaged object, wherefore "Structure from Motion" (SfM) is also a term used in conjunction. For a camera located at a human worker operated, handheld tool, the aspect of the cameras (and tools) movement is given by its nature, when the tool is operated in its intended way.

Nevertheless, in a manufacturing environment, the cameras view is not only opposed to a single environment, but images either the manufacturing environment, the workpiece or manufactured item or the image comprises portions of both of it. Therefore, a global manufacturing environment coordinate system can be defined, to which the tool can be referenced to, as well as a local coordinate system of the workpiece can be defined, to which the tool can also be referenced to.

Although there is a relation between the global and local coordinate system, this relation is not necessarily constant or exactly known. For example, in a moving assembly line configuration, those two coordinate systems and their corresponding views in the image will move with respect to each other - and of course also with the movement of the tool. Furthermore, the manufacturing environment comprises many mobile items, like workers, charts, supply stocks, parts, forklifts robots, etc. Those can neither be used for a simple feature mapping nor are they adequate for SLAM usage.

The invention also relates to a corresponding method for locating a handheld tool in a manufacturing environment where a workpiece is manufactured, for example an environment with multiple manufacturing stations of a car body, airplane or machinery production, preferably in an assembly line arrangement. The handheld tool is equipped with a camera so that a capturing of images with a defined reference with respect to the tool can be done. According to the invention, a determining of a tool-location of the handheld tool by a SLAM navigation calculation based on the images from the camera is done, with determining the tool-location with respect to a global coordinate system in relation to the manufacturing environment from portions of the image which comprise a view of the manufacturing environment and also determining the tool-location with respect to a local coordinate system in relation to the workpiece from portions of the image which comprise a view of the workpiece. In particular, wherein the local coordinate system can be moving with respect to the global coordinate system.

Determining the tool-location can involve a matching of the SLAM navigation with known spatial information of the workpiece and/or the environment, in particular of spatial information in form of CAD or pointcloud data.

Further, the method can involve sensing of a work process parameter by a sensor means at the tool and providing the tool-location together with the corresponding work process parameter as tool-surveillance data by a communication interface, in particular with providing the surveillance data to a manufacturing management system for managing the manufacturing and/or documenting the manufacturing of the workpiece, preferably together with providing an image from the camera of a work process result at the corresponding tool-location.

The method - or at least those parts of it which involve computation - can also be embodied as one or more computer program products, which are stored on a machine readable medium. Beside the storage on a medium, the computer program products can also be embodied as electromagnetic wave (such as wired or wireless data signal, etc.).

Consequently, the invention further relates to such a computer program product for executing a herein described SLAM navigation algorithm based on images from a camera at a tool in a manufacturing environment in which a workpiece is manufactured, preferably with a moving workpiece in an assembly line configuration. In the computed SLAM navigation, a location of the tool is established with respect to a global coordinate system relative to the environment by portions of the images depicting the environment and also with respect to a local coordinate system relative to the workpiece by portions of the image depicting the workpiece. The computer program product thereby in particular distinguishes between the global and the local coordinate system and the according image portions.

Systems, devices, methods and setups according to the invention are described or explained in more detail below, purely by way of example, with reference to working examples shown schematically in the drawing. Specifically,
- Fig. 1: shows an example of a first embodiment according to the invention in a schematic sketch;
- Fig. 2: shows an example of a second embodiment according to the invention;
- Fig. 3: shows an example of a third embodiment according to the invention;
- Fig. 4: shows an example of a tool location according to the present invention at an assembly line in a manufacturing environment;
- Fig. 5: shows examples of different usages of embodiments according to the invention in an assembly line.

The diagrams of the following figures should not be considered as being drawn to scale. Where appropriate, the same reference signs are used for the same features or for features with similar functionalities. Different indices to reference signs are used to differentiate between different embodiments of a feature which are exemplary shown.

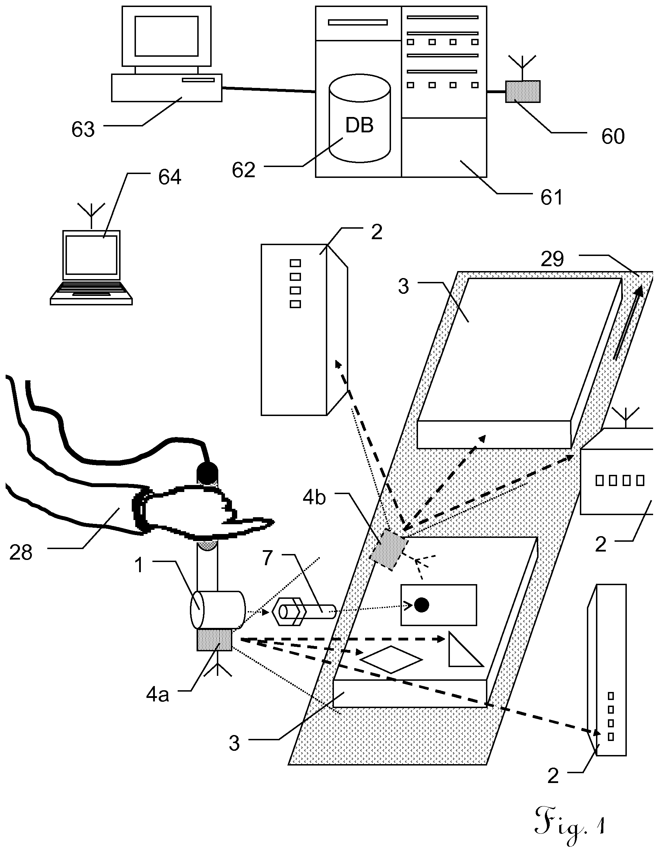

**Fig. 1** shows a sketch of an embodiment according to the invention, to illustrate the tool location and its context. There are workpieces 3 in the manufacturing environment 2 (of which environment for simplicity of the illustration only some dominant objects are shown and referenced). The workpieces 3 evolve on an assembly line 29, which is moving in the direction indicated by the arrow, either with constant velocity or stepwise. A human worker 28 uses a handheld tool 1 which he moves around to fulfil the desired task on the workpiece 3. By this tool 3, the worker for example attaches a screw 7 to the workpiece 3 as indicated by the shown dotted arrows. The tool 1 is according to the invention equipped with a camera 4a that is capturing images for SLAM navigation. The camera 4a images the workpiece 3 and/or the environment 2 - as shown by the dashed-line arrows. Depending on the pose of the tool 1 with the camera 4a, the image comprises the workpiece 3 only, the environment 2 only or a portion of the image comprises a section of the workpiece 3 while another portion of the image comprises a section of the environment 2. According to the invention, the SLAM navigation is therefore respectively executed in a global coordinate system of the environment for the environment portion of the image and/or in a local coordinate system of the workpiece for the workpiece portion of the image - dependent on the actual view of the camera 4a.

This is done by a structure-from-motion (SfM)- or simultaneous-localization-and-mapping (SLAM)- algorithm, which can e.g. be part of a stored computer program or code. The algorithm can be based on a perspective or affine camera projection model with observation sources which compromises multiple images and/or a video sequence and token types such as sparse feature correspondence, dense optical flow field, lines or curves, or direct SfM-techniques that do not extract any tokens from the images.

The SLAM approach for the tool-location is not a plain image matching of previously known features from constructional data in a camera image, as the SLAM does not require such previously known information for navigation, but autonomously evaluates the camera pictures for useful information. Therefore, the SLAM approach also works in previously unknown surroundings, where an evaluation for previously known features would not be applicable.

As an example, the following SfM-algorithm is described, which compromises a step where a number of image correspondences are found for at least some of the images of a set of multiple images gathered by the camera at different locations. This is done using feature detection and matching algorithms such as SIFT, SURF, BRISK, BRIEF, etc. Alternatively, in case of a video sequence, the correspondences can be found using a tracking algorithm on each video frame. Tracking can be done using e.g. Kanade-Lucas-Tomasi (KLT) feature tracker or another tracking algorithm.

Using suitable images, the relative camera pose, in particular position and orientation, is determined in an image coordinate frame. The algorithm preferably uses a robust search to find a 3D translation and rotation of the camera of the selected images, e.g. the relative position and orientation of a second image with respect to a first image. With these relative positions, the 3D position of all features seen in both images is computed using forward intersection. This gives a set of 3D points and the positions and orientations of the two initial frames.

In the next step, additional frames are added to the existing reconstruction. Using already reconstructed 3D points, the position and orientation - which the camera had during capture of an image - can be computed using resectioning. After adding a new image, the positions of 3D points are refined using all measurements in the reconstructed frames.

As a final or intermediate step, the overall solution is refined using bundle adjustment. This part of the algorithm can e.g. be done by a non-linear least squares minimization of the re-projection error. It will optimize the location and orientation of all camera positions and all 3D points.

If the recording contains multiple images from the same location, e.g. when the camera moves around an object and back to the starting point and/or beyond, the images from the same location causes an overlap which is matched and thereby a loop around the object is closed. This will increase the overall accuracy.

Additional constraints, e.g. positions of the cameras from global measurements, positions of reference targets from a predeceasing surveying or known constructional data can be included in the bundle adjustment to increase the robustness of the algorithm. For example, the figure shows an optional embodiment with an additional camera 4b for SLAM navigation as described before, that is located at the workpiece 3. This additional workpiece camera 4b can be used for a SLAM location of the moving workpiece 3 with respect to the global coordinate system, or - dependent on the cameras field of view - also of an additional back-referencing to the tool 1 when it is moved within the camera 4's view. Thereby the abovementioned additional constraints can be gained, and the navigation solution can be refined. Other addition constraints can e.g. be extracted from known constructional information of the workpiece 3 and/or the environment 2, for example in conjunction with known CAD or coordinate reference of the assembly line environment 2, or spatial data determined by an initial scan of the environment 2. The environment 2 can therefore initially be surveyed by a measurement device such as a tachymeter, total station, laser tracker or laser scanner. According to this surveying, a digital model such as a point cloud or CAD-file of the initial, preferably unpopulated, manufacturing environment 2 can be generated. The environment 2 can preferably also be initially surveyed based on a SLAM navigation with a moved camera from different viewing directions and positions (poses) as discussed herein and an environment point cloud can be derived by a the SLAM- (simultaneous localisation and mapping) or SfM- (structure from motion) algorithm or the like.

Alternatively, other SLAM or SfM algorithms than described above can be used to recover the positions and orientations of the camera 4a/4b, and consequently of the tool 1 respectively the workpiece 3 to which the camera 4a respectively 4b is attached to.

An embodiment of the tool 1 with camera 4 according to the invention can optionally also comprise an IMU, by which further constraints and navigation information can be gained and the relative positioning performance can be improved. In particular in situations when the dynamics of movement are so high that a pure image based navigation technique will not perform sufficiently, an IMU navigation can intermediately be used until the SLAM navigation is back to normal operation. The IMU can thereby also be calibrated by velocity updates derived from known motion calculated from imaging SLAM.

In an additional embodiment, further additional constraints can be added to the SLAM navigation according to the invention, e.g. by an addition of a cooperative target which can be placed in the environment as well as on the object (car body) or in the environment to support a high-precision reference for a certain location at in highly critical areas. Such cooperative targets can e.g. be embodied by retroreflective markers, LEDs or 2D or 3D contrast or code faces. The targets can also be embodied like described in EP 1 066 497 or similar to QR-codes. Nevertheless, the tool location approach according to the present invention is still SLAM based and only aided by such additional measurements, and it therefore the camera based navigation also works when no direct line of sight to any of such cooperative targets is established.

In another optionally embodiment the camera 4a or tool 1 can additionally comprise an illumination means, e.g. an annular LED solution around the camera optics.

In an assembly operation, loose or improperly tightened joints can cause problems, with consequences for the manufacturer and/or end-user. Those problems can arise in many different areas of the manufacturing industries, e.g. in the area of household appliances and consumer electronic, but also in the aerospace or automotive industry. In many instances, assurance and quality control programs are mandatory, not only in view of customer satisfaction and avoidance of malfunctions, but also for safety requirements and to be prepared for possible warranty claims or litigation.

In such quality assurance systems 63 for the manufacturing, fastenings can e.g. be characterized by their torque, angle and/or pulse requirements. By the present invention, this information can be gathered. A database 62 of such a quality control system 63 can record a complete production history of a produced good, but also for each tool a history of its usage, calibration. Also graphical and/or statistical analyses, e.g. for replacement and calibration prediction of the tools can be generated from such a database. Tightening tolerances, which can vary dependent on the tool, the fastening and the tools application can be considered in such an analysis. Thereby, constant quality can be maintained regardless of the operator 28 who uses the tool 1.

Thereby, a final checking of each product 3 leaving the assembly line can be avoided or at least reduced to some random samples only, as it is already ensured during the production that the right torque has been applied to each and every joint. Post-work checks on products can been reduced to an absolute minimum or additional checks of critical joints can be avoided as they are made directly at the production line 29. In contrast to a manual handling, an automated electronic database system as presented herein can also assure that the collected data is 100% complete and accurate, reduces bureaucracy and paperwork and is much easier to store and backup. Control of processes and tools 1 are given by information about tool-location and tool-status, but also more detailed information of when and where the tool 1 was calibrated, who last used it, for which workpieces 3 and at which tightening it was used, as well as recent self-test and diagnosis results can be provided.

The SLAM navigation according to the invention not only allows an autonomous tool-location, not relying on exact pre-knowledge spatial information of the surrounding, but can additionally be used to get dynamically updated information regarding the workpiece 3 and the environment 2. Such information can be gathered by a communication means 60 and evaluated by an observation and/or security system 61, which can recognize and evaluate all changes in the environment and can provide information for warnings, collision avoidance or production flow management.

By the tool-location system according to the present invention, not only an actual work progress control (e.g. to check if joints are tightened at the correct positions and in the correct sequence, or if glue is applied at the correct location in the correct amount), but also a fully automated documentation can be established. By the presently described system, it can be seamlessly recorded if all tooling tasks have been performed and if they were successful (e.g. at the right place/position, at the right object/car body, assembly of the right part and at the right time, etc.). By the cameras 4a/4b according to the invention, those results documentation can get combined e.g. with a camera 4a image of the part mounted, the screw screwed with the right torque, or image of the applied glue, etc. For example, an image of an applied nut together with the torque curve, assembly time and tool-location, plus further parameters can be provided and stored in a database 62.

A software application for data collection, process improvement and control of the assembly process can be run on the computation means 63. The prepared manufacturing information data like historical data, statistics, capability indexes, etc. can also be accessed by another computer 64, e.g. via a database 64 access or a standard web browser. This allows a virtual following of the production in real time. The present invention allows collecting all tightening results and storing them in the database 62. From this database 62, automatic reports related to a specified period or product can be generated, e.g. for process improvements, tool maintenance, quality variation, traceability, change management, legal documentation, etc. Such information can be highly valuable, in particular in case of warranty recalls.

Being implemented as a real time system, the operator can also be provided with feedback for his work, e.g. by signal lights at his workstation or tool, so he can apply self corrective action if problems arise. For example by monitoring the number of turns or the angle during a fastening process at the tool location, the system can automatically detect stripped or crossed threads, ensure a complete rundown of a fastener, detect missing washers, warn if it seems likely that material or cables were accidentally trapped beneath a bolt head, etc.

As the present invention has a higher flexibility of tool usage compared to other systems, it can also be used for repairs stations, flexible assembly cells and for low-volume, high-value component assembly.

The camera image can also be used for tooltip-identification, if the tool can be used with worker exchangeable nuts, bits or tooltips. Depending on the cameras field of view, which is preferably rather large, also the worker using the tool can be identified by face recognition in the image, so that e.g. the tool can not be operated by an untrained operator to apply a critical joint.

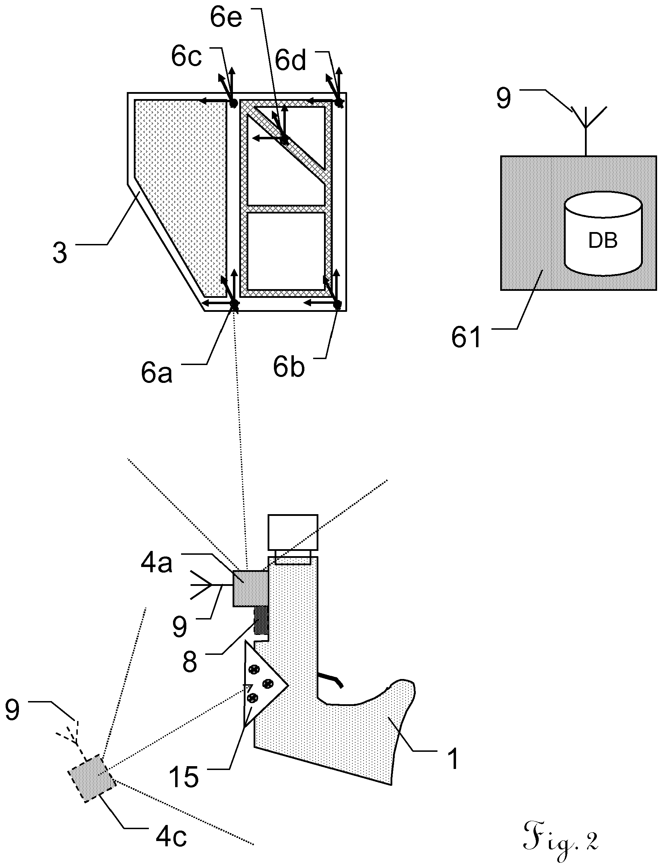

**Fig. 2** shows another illustration of the present invention, where the tool 1 equipped with the camera 4a that captures images for a SLAM navigation of the tool-location. At the workpiece 3, desired target locations 6a to 6e, at which the tool 1 has to be applied, are illustrated by their local coordinate systems. The SLAM determined tool location is referenced with respect the local workpiece coordinate system, and the tooling parameters can be adapted to each location, e.g. defined different torque requirements for the locations 6a and 6b compared to 6c and 6d or 6e. According to the tool-location it can also be ensured that all the locations 6a to 6e have been worked in their correct order, wherefore a resolution of a prior art UWB system would not be sufficient. For determining the torque or other processing parameters, the tool 1 can comprise sensor means for determining the according information. The figure also shows the option of an additional IMU 8 to aid the tool navigation as discussed before.

The shown tool 1 also comprises a communication means 9. The communication means are herein shown wireless, as this is the preferred option in many instances, but it can also be wired in another embodiment - e.g. if a supply line is present anyway. Thereby, tooling data and tool-location data can be transmitted to a control station computer 61, which also has a communication link 9. Apparently the communication can be routed through some middleware, where only selected information can pass, or information is preprocessed and/or reformatted.

Also, an optional external camera 4c referencing of the tool 1 is shown in this embodiment. The optional camera 4c can also establish a communication link 9 and the information gathered thereby can be combined with the one from the SLAM navigation of tool 1. The tool 1 is in this exemplary embodiment also equipped with a visual marker 15, to be tracked in the image of the camera 4c for a referencing of the tool 1 in the manufacturing environment 2.

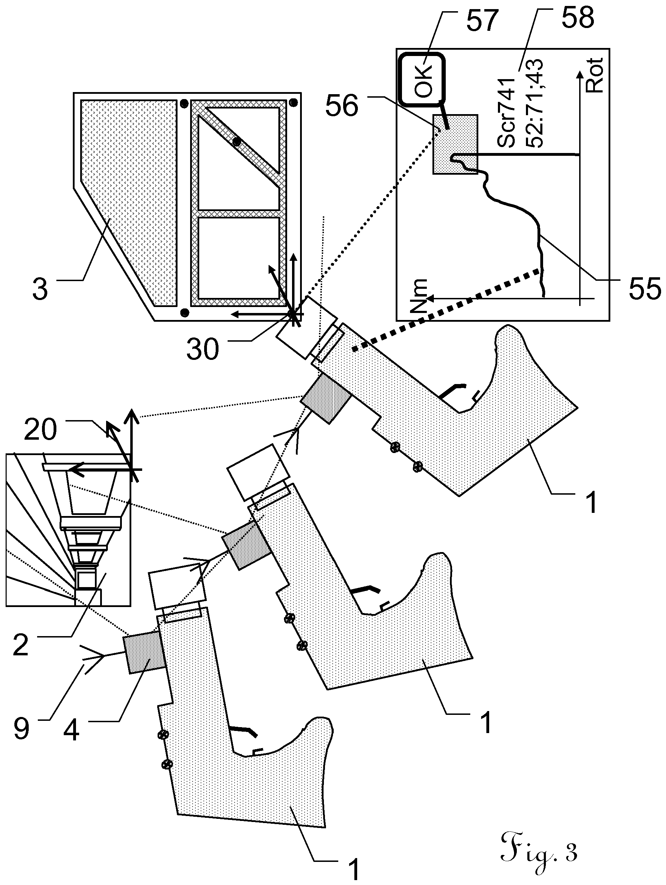

**Fig. 3** shows the movement of the tool 1 in two coordinate systems, which coordinate systems can also be moving with respect to each other.

In the lowermost view of the tool 1, its camera 4 images the manufacturing environment 2, according to which images a SLAM navigation is done in a corresponding global coordinate system 30 to determine the tool-location.

In the middle view of the tool, both the environment 2 and the workpiece 3 are comprised in the view of camera 4. The SLAM navigation is done on the portions of the image which comprises a view of at least part of the environment 2 - related to the global coordinate system 20 and also on the portions of the image which comprises a view of at least part of the workpiece 3 - related to the local coordinate system 30. Thereby, the tool-location is known in both coordinate systems.

In the uppermost view, the tools 1 movement with respect to a local coordinate system 30 of the workpiece 3, which is determined by SLAM navigation based on the images of the of the camera 4 which are now showing only the workpiece 3. Related to the thereby determined tool-location e.g. shown by the location information 58 in the local and/or global coordinate system, a torque curve 5 of the tools usage is recorded and compared with a desired range 65 that corresponds to this tool-location 58. If the desired result 56 is - as in the shown example - achieved at the desired location 58, an OK signal is issued - which can also be indicated to the worker operating the tool 1.

According to the present invention, a camera based SLAM navigation system comprising at least one optical camera 4 is used for tool position determination. Thereby a tracking of tools 1 in a manufacturing environment 2 is established, but the invention can also be extended to other movable items in a production environment 2.

For interaction and data exchange, a communication system 9 (in particular a wireless communication system such as a WIFI, long range Bluetooth or equivalent) is also comprised in a setup according to the present invention. The communication system 9 is built to exchange data related to the manufacturing process, like the above mentioned positional information 58 and/or tool parameters 56, 57 (like locked, unlocked, parameters of the desired task, tool status, calibration status, battery level, etc).

The communication can e.g. involve the camera 4 entities, a tool sensor system, a guidance and control system, a production planning software, a quality management system, a control terminal, a database of production data, a server, etc. Communication can take place between measurement sensors on the tool 1, the workpiece 3 and the environment 2, machines/robots or storage and logistics systems, as well as with other tools 1. The communication can be managed by a central assembly line management system 61 or intelligently distributed system. For example the information required for a tool-location can be locally organized by pulling necessary information from the cameras 4, servers 61, etc. An environment control can also be established by pushing information to a central system for processing those data. Such a networked assembly line environment can also have an interface to some middleware to connect the sensors to an enterprise network. Approaches like the examples presented in US 7,735,060, US 8,015,547, US 8,095,923 or US 2008/0005721 can be used to interface the present invention and its location and/or sensor data with other systems like production planning tools, provisioning software, documentation software, existing quality management systems, enterprise networks, etc.

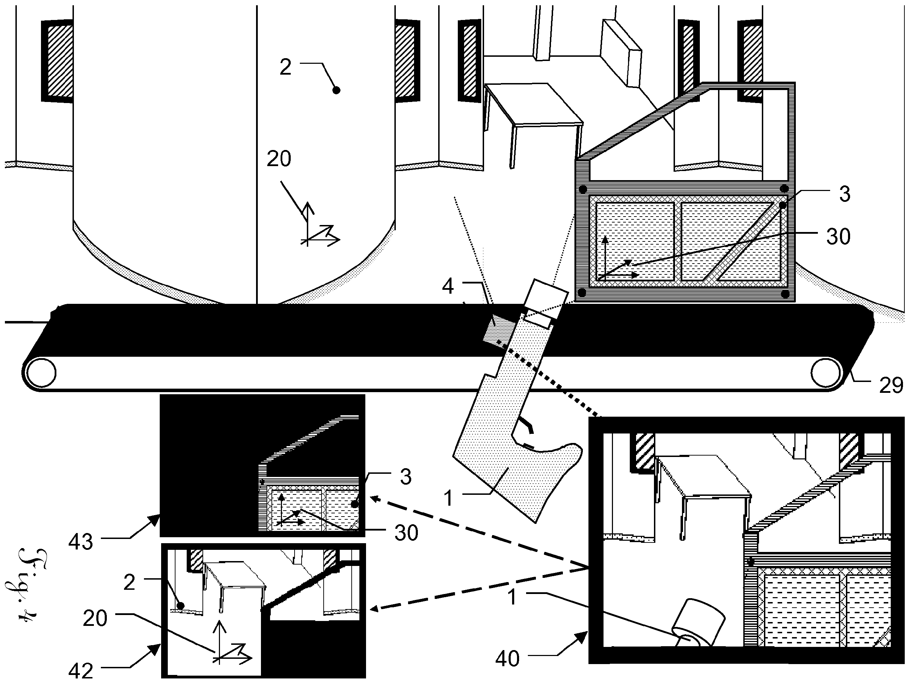

The embodiment of the present invention shown in **Fig. 4** relates to an exemplary manufacturing environment 2 for a workpiece 3 like the shown car body production in an assembly line 29. The range of such an assembly line 29 can exceed up to 60 ... 100 m or even more - so the figure only illustrates a small portion thereof. Although the environment 2 can be split into multiple logical sections, which could even be geographically separated, still an overview of the whole line is required to plan and control the production. In view of flexible production, not only static assembly lines 29 are used to move the workpiece along a well defined track in the manufacturing environment 2, but nowadays also autonomous carts, which are not physically tied to a track (like in a rail-guided system), are used alternatively to the static assembly lines 29 to transport the workpieces 3. In particular in such flexible systems, the present invention can gain additional advantages as the workpiece location in the environment is not always exactly known.

The manufacturing environment 2 is thereby associated with a corresponding global or world coordinate system 20. According to the present invention, a positioning of tools 1 in the manufacturing environment 2 is determined, in particular for tools 2 which e.g. require defined torque of screwing or another parameter of the tools operation which can be critical in view of workpiece quality.

The global coordinate system 20 can also be represented by an assembly line information, e.g. in form of digital data like CAD information or an assembly line information system for production control. The assembly line information can comprise the moving assembly line, associated storage along the line, manufacturing robots, and other stationary items, but there are also moving parts like trolleys, workers, service and malignance equipment, etc. The assembly line information and its coordinate reference can be extracted from design files of the working environment and/or can be generated or verified by e.g. an initial surveying or a scan of the assembly line environment using Laser Scanning or image based structure from motion or SLAM technique. This information can be stored in an environment information model based on or combined with determined point-wise, line-wise or 2D/3D element geospatial information.

In an extended embodiment, a camera 4 of the system according to the invention can not only be placed on the tool 1 but also on the manufacturing object 3, for example on the hood of a car body in the assembly line. So not only the tools 1 but also the moving car body 3 can get located in the larger assembly line environment by a SLAM navigation according to the present invention, preferably in real time.

The car body 3 system is also represented in a local coordinate system 30, which can for example be defined in accordance with a car body's computer aided design (CAD) information. This local coordinate system 30 builds a reference for the manufacturing work at the car body, wherefore dedicated tools 1 are used.

The tool 1 can be located in the global manufacturing coordinate system 20 as well as in the local car body coordinate system 30 - respectively in both of them as they can be associated with respect to each other.

According to the invention, the camera 4 is used for structure from motion or SLAM algorithms to derive location information, in particular in conjunction with deriving environment feature position. Thereof, the absolute tool-location can be determined in the global coordinate system 20, in particular aided by known environment information. In conjunction with deriving workpiece or manufacturing objects feature position the local coordinates 30 in the (might moving) workpiece (e.g. a car body) system can be determined, which can in particular also be aided by the known CAD of the workpiece 3. Dependent on the images gathered at the cameras actual view, either local, global or both camera based SLAM coordinate determinations can be executed. So also a seamless transition between the global 20 and the local 30 reference systems can take place, e.g. when moving the tool 1 into the car body, where the camera on the tool can not image the external world system reference at all or at least not in a sufficient manner to apply a SLAM navigation. Respectively vice versa - when the tool 1 is moved out of the car body again.

The transition into the car body local coordinate system 30 allows a direct tool location relative to the workpiece 3 (i.e. the car body) itself, in which the tooling actually takes place. A usage of a moving coordinate system to determine a desired and/or actual tooling location would be hindering and would complicate things. The use of the global world coordinate system 20 outside the car body is necessary during phases of non-tooling and global coordinate system information is preferably always available, alt least in parallel, to assure surveillance of the tools (and worker) for safety / collision avoidance and other warnings or for work coordination/organization such as availability check, parts pickup/delivery, etc.

The determination of the potentially moving local coordinate system 30 of the car body 3 in relation to the global world system 20 can be supported by a measurement system on the car body (e.g. on the hood) which is also based on the SLAM navigation. For the SLAM navigation it can be advantageous, if the camera 4 has a quite broad field of view.

The herein used simultaneous localisation and mapping (SLAM) can also be described as a process of concurrently building a map of a surrounding, particularly based on stationary features or landmarks within the surrounding, and using this map to determine the location of the camera within this map. The method can start with unknown location of the camera and without a priori knowledge e.g. of its location in the surrounding or of a landmark locations.

A vision based system is used for providing data to the SLAM algorithm to form a locating system for the surveying system. This technique, also known as visual SLAM (VSLAM), uses a passive sensing by the camera to provide a low power and dynamic localisation system. Image processing is used to determine and locate features in the images acquired by the camera, particularly identical points of the environment in different images. Those features are used by the SLAM algorithm which then accurately computes the three-dimensional location of each feature and hence particularly to start to build a three-dimensional map as the camera is moved around the space. The camera 4 may be implemented with a large field of view, or as a panoramic camera providing a field of view up to 360° around at least one axis.

As an example, the in the following a simplified example of a possible algorithm is described, which compromises a step where a number of image correspondences are found for at least some of the images of a set of image data. This is done using feature detection and matching algorithms such as SIFT, SURF, BRISK, BRIEF, etc. Alternatively, in case of a video sequence, the correspondences can be found using a tracking algorithm on each video frame. Tracking can be done using e.g. Kanade-Lucas-Tomasi (KLT) feature tracker or another tracking algorithm.

Using a series of, particularly successive, images the relative camera pose, i.e. position and orientation, is determined in a corresponding coordinate frame. The algorithm uses a robust search to find a 3D translation and rotation of the camera of the images, e.g. the relative position and orientation of a second image with respect to a first image. Based on these relative positions, the 3D position of the features seen in multiple images is computed using forward intersection. This gives a set of 3D points and the position and orientation information of those images. In a next step, additional images can be added to the existing reconstruction. Using already reconstructed 3D points, the position and orientation, which the camera had during capture of an image, can be computed using resection. After adding a new image, the positions of 3D points are refined using all measurements in the reconstruction.

According to a specific embodiment of the SLAM system, a control and evaluation unit is configured so that the spatial representation generation functionality is controlled and executed in such a way, that a point cloud is generated spatially inclusive and comprehensive across the whole surrounding.

In the present application, the camera 4 can actually be confronted with more than one coordinate systems, which are movable with respect to each other. An approach to handle this is to dynamically fading out undesired portions from the gathered images, in order to improve processing.

The tool location system therefore comprises a camera module 4 and a control and evaluation unit to be used for the SLAM-navigation that is adapted to determine location information of a handheld tool 1, which is moved by a worker. The camera module 4 can designed to be attached to the tool 1 of be integrated into the tool 1 and comprising at least one camera 4 for capturing images. The control and evaluation unit has stored a program with program code so as to control and execute the SLAM location functionality.

When moving the camera 4 along a path through a surrounding - a series of images of the surrounding is captured with the at least one camera 4. The series comprising an amount of images captured with different poses of the camera 4, the poses representing respective positions and orientations of the camera 4. Then a set of image points is identified based on the series of images, the image points representing reference points of a reference point field. Therein, each reference point appears in at least two images of the series of images and the poses for the images is determined based on resection using those image points.

In order to handle a possible view comprising the workpiece 3 as well as the environment 2, this difference is recognized in the series of images and the image portions being not of interest are defined as interfering object, e.g. by means of feature recognition techniques and/or comparison of the images. The recognised interfering object portion is then faded out in concerned images and not regarded in the identification of a set of image points and/or the determination of the poses for the images. Thereby, the evaluation is less effortful more robust and more accurate and interferences are suppressed.

According to an embodiment of the SLAM navigation, the control and evaluation unit is configured so that the spatial representation generation functionality is controlled and executed in such a way, that a moving object is recognised as the interfering object on basis of a motion detection algorithm, particularly by feature tracking. According to the present invention, in particular, a person, a cart of other moving objects are identified as interfering objects and not considered.

In the figure, an image 40 of the camera 4 is shown. The image shows the field of view from the camera 4 which also comprises the working range of the tool 1. Thereby, e.g. also the kind and/or condition of the used tooltip is documented when the image is saved.

For the SLAM navigation, the image 40 is considered differently, namely it is analysed with respect to the local coordinate system 30 of the object 3 only - which is illustrate by the picture 43. In this picture 43 the environment is faded out -as illustrated by the black portions, e.g. as described before. (Apparently, in practical embodiment the undesired image portion are not necessarily blacked out in the shown way, but can be numerically faded.) The SLAM navigation therefore takes into account the workpiece and determines tool-location information with respect to the local coordinate system 30.

In the picture 42, the imaged environment 2 is considered in the SLAM navigation and the portions of the image related to the workpiece 3 are faded out for consideration - as again illustrated by the black image portion. Thereby, the tool-location is determined with respect to the global coordinate system 20 of the environment 2.

Beside the principles already discussed before, also a background-foreground analysis can be applied to the camera image to determine the environment 2 and workpiece 3 image portions.

The detection and fading out of interfering objects also allows a faster data processing, as less amount of image data has to be considered for determining the location. Furthermore, the calculated location comprises a higher degree of precision as compared to an approach where only the whole images are taken into account.

The control and evaluation unit can also store a program with program code so as to execute a camera calibration functionality in which e.g. an image which covers a defined reference pattern is captured by the at least one camera and calibration parameters regarding a fixed spatial relationship between a location measuring resource and the camera are determined. The image representation can also be scaled with help of given information about a known absolute reference, like some constructional data of the workpiece 3 and/or environment 2. For example, the vertical orientation of the spatial representation can be determined using a reference known to be vertical, but also the IMU can aid in this process and e.g. a warning can be issued if a cameras view does not appear in an inclination it is supposed to.

As mentioned, an inertial measurement unit (IMU), which is fixed with respect to the camera can also aid the determination of the cameras movements. The measured accelerations and angular rates can be used to measure the relative position and orientation between the images by integration. Using these relative positions, a shift rotation and scale of the point cloud can be found that minimizes the difference between the measured relative positions and the relative positions of the transformed camera positions. On the other side, the drifting problems which are known for such IMUs can be detected and compensated by the SLAM navigation, which does not suffer from those drifting effects.

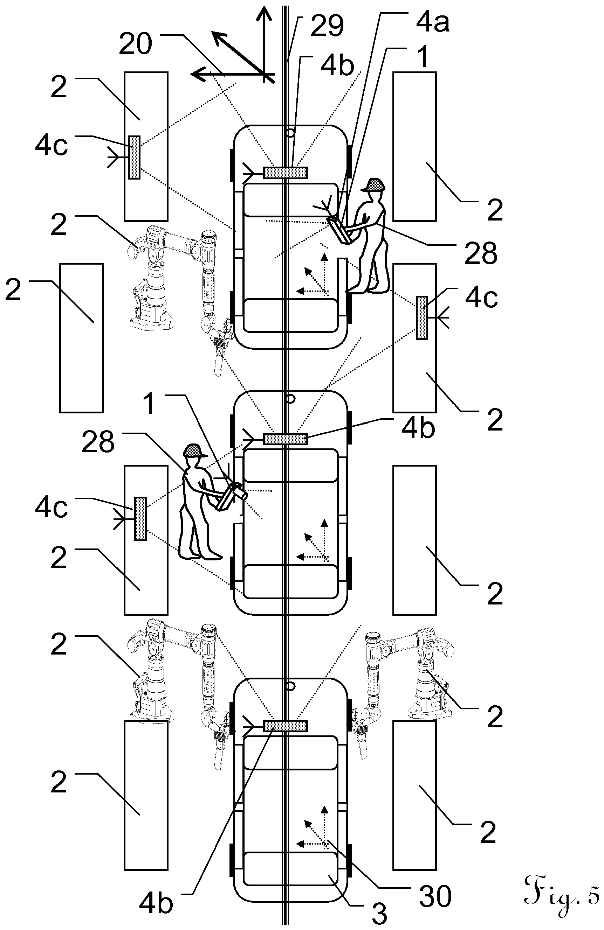

**Fig. 5** shows a special embodiment of the present invention, wherein multiple options and embodiments of the present invention are shown, which can be used separately or in combination with each other.

The shown assembly line 29 transports car bodies 3 workpieces in certain velocity, which can also be variable dependent on the production progress or amount of work for different variants. The movement is with respect to a global coordinate system 20 of the working environment 2 illustrated by stationary equipment like poles, robot basements, cabins, cupboards, electrical cabinets, etc. Each car body 3 defines its local coordinate system 30.

The workers 28 are using handheld tools 1 according to the invention, for assembling the car bodies 3. Those tools are equipped with a camera 4 for a SLAM based tool location of the tool 1 in the global and/or local coordinate system.

The special embodiment of the present invention shown in this figure additionally uses a set of stationary cameras 4c observing at least part of the manufacturing environment 2. Thereby, the global coordinate system 20 is also defined, wherein one or more local coordinate systems 30 can be defined, which can for example relate to a manufactured item, good or workpiece 3 or a part of it. Theses local coordinate systems 30 are for example known from or related to constructional data of the manufactured goods 3. In the shown example of an assembly line like configuration of the working environment 2, the local coordinate systems 30 can be moved with respect to the global coordinate system 20. This movement can be continuously or stepwise along a predefined guided track, but the movements can also be flexible e.g. on guided, autonomous or manually movable carts or the like. Although also applicable on small scale environments, the manufacturing environment 2 targeted by the present invention can in particular cover ranges which exceed 60m or 100m, or more, as the used SLAM navigation principle has no range limit and works virtually anywhere, so tools 1 can be moved and exchanged without requiring any modification to them.

Manufacturing or assembly steps are always executed with respect to a certain local coordinate system 30 and in many instances some tool 1, in particular a power tools, is used therein. Such tools 1 can for example be power wrenches, screwdrivers, clamping tools, rivet tools, drilling tools, glue expelling tools, etc. They can be equipped with a line power supply such as electricity or air pressure or the can have movable power sources like batteries or the like. An special embodiment of the present invention can also be used on tools 1 attached to a positioning torque arm or an articulated arm that provides almost zero gravity support of the tool 1 and/or absorbs the torque reaction. Nevertheless, the present invention does not demand overhead rail system, articulated arms or similar which can provide spatial information by integrated position sensors, as SLAM navigation is used to determine the tool-location according to the invention. The tools 1 are movable, preferably by hand within the working environment 2, but they can sometimes also leave and enter the working environment 2, e.g. in case of replacement, repair or calibration, but also on other planed or unplanned occasions.

Beside the tools, also the manufactured items or workpiece 3 and the parts to be assembled to it are associated with coordinates in the global coordinate system 20 and/or the local coordinate system 30. But as said above, in view of the manufacturing process the respective local coordinate system 30 is more of relevance in view of the manufacturing steps to be executed by the tool 1. Nevertheless, the global coordinate system 20 can e.g. be of relevance for management purposes and fault protection, like avoiding a tightening at a wrong stage of the production environment 2.

According to the here shown, special embodiment of the present invention, the global coordinate system 20 of the working environment 2 is observed by a set of multiple, preferably stationary, cameras 4c. By this camera system, positional information of the tools 1 and items 3 in the working environment 2 can be determined, preferably with an accuracy in the cm range or better, and also movable items can be located and tracked. This global coordinate system evaluation can also involve predefined geometrical information regarding the working environment 2, the tools 1 and the items 3, e.g. derived from digital design data. To further improve locatabillity within the global coordinate system 20, the tool 1, the items 3 and/or the environment 2 can additionally be equipped with dedicated markers at certain critical locations. For example principles like discussed in EP 1 066 497 can be applied.

By the global referencing, the items 3 and tools 1 can be tracked - and based on this information an assignment of item and tool can be established, without the requirement to explicitly scan an identification code at the item before the tool is applied.

According to the here shown embodiment of the present invention, not only a global coordinate system referencing is done by cameras 4c at the working environment 2, but also a local coordinate system referencing is done by camera means 4a at the tool 1 and/or camera means 4b at the item or workpiece 3. Therein the local referencing is done by applying a SLAM of SfM algorithm to the camera images, according to which navigational information is derived from the camera images. The camera 4a at a tool is in particular arranged in such a way that its field of view comprises at least part of the tools working range, so that the actual working process and its location can be imaged.

The tools SLAM navigation is done against the global coordinate system 20 and/or the local 30 coordinate system, dependent on the actual field of view and/or based on information of the global referencing. The fact that both the production environment 2 as well as the workpiece 3 to be manufactured comprises to a great extent known geometries, can also ease the slam navigation by providing further restrictions. For example, an assembly line 20 comprises many stationary items which can be identified in the local camera image. Spatial information about the production environment is often known based on construction plans. Alternatively or in addition, the spatial information can also be made available - e.g. by an initial surveying, laser scanning, SLAM techniques by a moving camera based measurement system, or other known techniques - which result in spatial information that can be stored as a known information model. Stationary items in the global referencing coordinate system 20 allow a back-referencing with respect to the global referencing, whereby a combination of information from both stationary and freely movable cameras can be used to improve the referencing accuracy and reliability.

Still, the SLAM navigation - which is used according to the invention - is capable to cope with changing a working environment. Such a changing environment is a hardly avoidable component in a production environment 2 targeted by the present invention. For example workers 28, moving robots, carts, supply stocks and supply delivery, service and maintenance personal and/or equipment, adoptions and optimization in the production sequence and facilities, etc. are resulting in a dynamically changing part of the production environment. Therefore, a static only navigation approach would tend to fail or malfunction.

In an exemplary special embodiment, the local coordinate system 30 is in general be considered as mostly known, wherefore the images from the tools camera 4a, which are used for SLAM navigation according to the present invention, can additionally also be used to actively detect and indicate certain deviation which can be caused by an incorrectly executed previous manufacturing step. But still, the tool-location system itself is immune against such deviations, so that a flexible production approach or a plurality of possible option of the manufactured item resulting in unexpected camera images does not hinder the tool location.

The SLAM approach allows a position determination on its own, for example like at locations where a global referencing from environmentally fixed stations fails to provide valid or accurate information. Therefore, even in case of a shielding of the tool from the global referencing, e.g. by a part of the item, the worker and/or other obstacles, a valid positional information is maintained. The present invention also works if the camera 4 on a handheld tool 1 is confronted with quite odd and unconventional views of the item 3 and/or the working environment 2, e.g. if - for whatever reason - the worker holds or places the tool in an inconvenient way.

As an addition, some embodiments can also be quipped with an Inertial Measurement Unit (IMU), which can provide additional navigational information which can be superimposed to the SLAM navigation. Such an IMU can in particular be an advantage to handle fast, high dynamic movements of the tool 1 and to keep the positional information valid. The IMU can for example also be used to detect an accidental drop or misuse of the tool 1 and can then indicate that a quality control and/or calibration of the tool 1 might be required in order to ensure correct operation.

Operator guidance, e.g. by display means on the tool 1, ranging from a simple indication light to display means providing graphical or image information, or an acoustic or haptic indication. The operator guidance can e.g. also be done by means of augmented reality, provided by a display or by VR-glasses, which overlay a reality image (e.g. the image from the camera) by graphical information regarding the task to be executed, which can also comprise positional guidance.

## Claims

1. Tool location system for a handheld tool in a manufacturing environment where a workpiece is manufactured,
in particular at multiple manufacturing stations in a car body, airplane or machinery production,
wherein the manually movable tool is equipped with a camera for capturing images,
**characterized in that**
the location system comprises a numerical evaluator means, which is built to determine a tool-location of the tool by a simultaneous location and mapping (SLAM) navigation calculation based on the images from the camera at the tool, wherein
▪ the tool-location is determined with respect to a global coordinate system in relation to the manufacturing environment from portions of the images from the camera at the tool, which portions comprise a view of the manufacturing environment and
▪ the tool-location is determined with respect to a local coordinate system in relation to the workpiece from portions of the images from the camera at the tool, which portions comprise a view of the workpiece,
in particular wherein the local coordinate system is moving with respect to the global coordinate system in an assembly line arrangement.

2. A system according to claim 1, **characterized in that** the determination of the tool-location involves a matching of the SLAM navigation with known spatial information of the workpiece and/or the environment, in particular of spatial information in form of CAD or pointcloud data.

3. A system according to claim 1 or 2, **characterized in that** the evaluator means is built to establish a seamless transition of the tool-location between the local coordinate system and the global coordinate system, in particular with a live-updated referencing of the local coordinate system with respect to the global coordinate system.

4. A system according to any one of claims 1 to 3,
**characterized in that**
the tool comprise an inertial measurement unit (IMU) and the determination of the tool-location involves information gathered from the IMU used in an inertial navigation algorithm.

5. A system according to any one of claim 1 to 4,
**characterized in that**
the manufacturing environment and/or the workpiece comprises multiple cooperative and or actively light emitting targets built to be identified in the camera image, in particular contrast faces, reflectors or LEDs.

6. A system according to any one of claim 1 to 5,
**characterized in that**
the tool comprises a communication interface, in particular a wireless communication interface, preferably a real time communication interface, which is built to exchange its localization and/or image information with a manufacturing management system and/or other tools.

7. A system according to claim 6, **characterized in that** the tool comprises a sensor means for sensing a work process parameter of a tools operation and
wherein the work process parameter is provided together with the corresponding tool-location as tool-surveillance data by the communication interface, in particular to the manufacturing management system for management and or documentation of the manufacturing history of the workpiece, preferably wherein the tool-surveillance data comprises an image from the camera depicting a work process result of the tools operation.

8. A system according to any one of claim 1 to 7,
**characterized in that**
the tool is a mounting tool, in particular a screwdriver tool, a wrench tool, a clamping tool or rivet-tool, preferably torque- and/or position-monitored power tool driven by electricity or compressed air, and
the camera has a field of view comprising at least a part of an operating range of the tool.

9. A system according to any one of claim 1 to 8,
**characterized in that**
the workpiece is movable and is also equipped with a camera for SLAM navigation of the workpiece-location in the global coordinate system, in particular in the same way as the tool, in particular wherein the workpiece-location and the tool-location are combined, preferably whereby a referencing of the global coordinate system and the local coordinate system is established.
wherein a back-referencing between the tool and the workpiece navigation is established by the location of the tool with the camera at the workpiece and the location of the workpiece with the camera at the tool.

10. A tool surveillance system for a manufacturing environment,
wherein the manufacturing environment comprises
▪ stationary items and
▪ movable items, comprising
o a workpiece to be manufactured and/or parts thereof,
o a tool to be handled by a human worker, and
a tool location system according to any one of claims 1 to 9 for the tool.

11. A tool surveillance system claim 10, **characterized in that**
the manufacturing environment is equipped with
▪ multiple global cameras for imaging the manufacturing environment, in particular stationary global cameras, and
▪ an image processing means built to identify/detect the stationary and movable items in the manufacturing environment and to determine their global positional coordinates in a global environment coordinate system, in particular in at least three dimensions, and
wherein the global positional coordinates are matched with the determined tool-location, in particular wherein a back-referencing between the tool and the environment navigation is established by the location of the tool with the camera at the environment and the location of the environment with the camera at the tool.

12. Method for locating a handheld tool in a manufacturing environment where a workpiece is manufactured,
in particular in an environment with multiple manufacturing stations of a car body, airplane or machinery production, preferably in an assembly line arrangement,
wherein the tool is equipped with a camera for capturing images,
**characterized by**
determining a tool-location of the tool by a simultaneaous location and mapping (SLAM)
navigation calculation based on the images from the camera at the tool, with
▪ determining the tool-location with respect to a global coordinate system in relation to the manufacturing environment from portions of the image from the camera at the tool, which portion comprise a view of the manufacturing environment and
▪ determining the tool-location with respect to a local coordinate system in relation to the workpiece from portions of the image from the camera at the tool, which portion comprise a view of the workpiece,
in particular wherein the local coordinate system is moving with respect to the global coordinate system,

13. Method according to preceding claim 12, **characterized in that**
determining the tool-location involves a matching of the SLAM navigation with known spatial information of the workpiece and/or the environment, in particular of spatial information in form of CAD or pointclou.d data.

14. Method according to any one of the preceding claims 12 or 13, **characterized by**
a sensing of a work process parameter by a sensor means at the tool and providing the tool-location together with the corresponding work process parameter as tool-surveillance data by a communication interface, in particular with providing the surveillance data to a manufacturing management system for managing the manufacturing and/or documenting the manufacturing of the workpiece, preferably together with an image from the camera of a work process result at the corresponding tool-location.

15. Computer program product comprising program code stored on a machine-readable medium, or computer-data-signal embodied as an electromagnetic wave, for executing a SLAM navigation algorithm based on images from a camera at a tool in a manufacturing environment in which a workpiece is manufactured, preferably with a moving workpiece in an assembly line configuration, wherein a location of the tool is established
▪ with respect to a global coordinate system relative to the environment by portions of the images from the camera at the tool, which portions are depicting the environment and also
▪ with respect to a local coordinate system relative to the workpiece by portions of the image from the camera at the tool, which portions are depicting the workpiece,
especially for computing the method according to any one of claims 12 to 14, in particular executed in a computation means of a tool location or surveillance system according to any one of the claims 1 to 11.

## Patentansprüche

1. Werkzeugpositionssystem für ein Handwerkzeug in einer Fertigungsumgebung, in der ein Werkstück gefertigt wird, insbesondere in mehreren Fertigungsstationen bei der Fahrzeugkarosserie-, Flugzeug- oder Maschinenherstellung, wobei das manuell bewegliche Werkzeug mit einer Kamera zum Aufnehmen von Bildern ausgestattet ist,
**dadurch gekennzeichnet, dass**
das Positionssystem ein numerisches Auswertungsmittel umfasst, das dafür aufgebaut ist, eine Werkzeugposition des Werkzeugs durch eine Navigationsberechnung mittels simultaner Positionsbestimmung und Kartenerstellung (SLAM) basierend auf den Bildern von der Kamera am Werkzeug zu bestimmen, wobei
▪ die Werkzeugposition in Bezug auf ein globales Koordinatensystem in Relation zu der Fertigungsumgebung aus Abschnitten der Bilder von der Kamera am Werkzeug bestimmt wird, wobei diese Abschnitte eine Ansicht der Fertigungsumgebung umfassen, und
▪ die Werkzeugposition in Bezug auf ein lokales Koordinatensystem in Relation zu dem Werkstück aus Abschnitten der Bilder von der Kamera am Werkzeug bestimmt wird, wobei diese Abschnitte eine Ansicht des Werkstücks umfassen,
insbesondere wobei sich das lokale Koordinatensystem in Bezug auf das globale Koordinatensystem in einer Montagebandanordnung bewegt.

2. System nach Anspruch 1,
**dadurch gekennzeichnet, dass**
die Bestimmung der Werkzeugposition einen Abgleich der SLAM-Navigation mit bekannten räumlichen Informationen des Werkstücks und/oder der Umgebung, insbesondere räumlichen Informationen in Form von CAD- oder Punktwolkendaten, beinhaltet.

3. System nach Anspruch 1 oder 2,
**dadurch gekennzeichnet, dass**
das Auswertungsmittel dafür aufgebaut ist, einen nahtlosen Übergang der Werkzeugposition zwischen dem lokalen Koordinatensystem und dem globalen Koordinatensystem herzustellen, insbesondere mit einer live aktualisierten Referenzierung des lokalen Koordinatensystems in Bezug auf das globale Koordinatensystem.

4. System nach einem der Ansprüche 1 bis 3,
**dadurch gekennzeichnet, dass**
das Werkzeug eine Trägheitsmesseinheit (IMU) umfasst und die Bestimmung der Werkzeugposition von der IMU gesammelte Informationen beinhaltet, die in einem Trägheitsnavigationsalgorithmus verwendet werden.

5. System nach einem der Ansprüche 1 bis 4,
**dadurch gekennzeichnet, dass**
die Fertigungsumgebung und/oder das Werkstück mehrere kooperative und/oder aktiv lichtaussendende Ziele umfassen, die dafür aufgebaut sind, in dem Kamerabild identifiziert zu werden, insbesondere Kontrastflächen, Reflektoren oder LEDs.

6. System nach einem der Ansprüche 1 bis 5,
**dadurch gekennzeichnet, dass**
das Werkzeug eine Kommunikationsschnittstelle, insbesondere eine drahtlose Kommunikationsschnittstelle, vorzugsweise eine Echtzeit-Kommunikationsschnittstelle, umfasst, die dafür aufgebaut ist, ihre Lokalisierungs- und/oder Bildinformationen mit einem Fertigungsverwaltungssystem und/oder anderen Werkzeugen auszutauschen.

7. System nach Anspruch 6,
**dadurch gekennzeichnet, dass**
das Werkzeug ein Sensormittel zum Erfassen eines Arbeitsprozessparameters eines Betriebs eines Werkzeugs umfasst, und wobei der Arbeitsprozessparameter zusammen mit der entsprechenden Werkzeugposition als Werkzeugüberwachungsdaten durch die Kommunikationsschnittstelle bereitgestellt werden, insbesondere an das Fertigungsverwaltungssystem zur Verwaltung und/oder Dokumentation der Fertigungsgeschichte des Werkstücks, wobei die Werkzeugüberwachungsdaten vorzugsweise ein Bild von der Kamera umfassen, das ein Arbeitsprozessergebnis des Betriebs des Werkzeugs zeigt.

8. System nach einem der Ansprüche 1 bis 7,
**dadurch gekennzeichnet, dass**
das Werkzeug ein Montagewerkzeug ist, insbesondere ein Schraubendreher-Werkzeug, ein Schraubenschlüssel-Werkzeug, ein Zwingen-Werkzeug oder Niet-Werkzeug, vorzugsweise ein drehmoment- und/oder positionsüberwachtes angetriebenes Werkzeug, das durch Elektrizität oder Druckluft angetrieben wird, und die Kamera ein Sichtfeld aufweist, das wenigstens einen Teil eines Betriebsbereichs des Werkzeugs umfasst.

9. System nach einem der Ansprüche 1 bis 8,
**dadurch gekennzeichnet, dass**
das Werkstück beweglich ist und auch mit einer Kamera zur SLAM-Navigation der Werkstückposition in dem globalen Koordinatensystem, insbesondere auf die gleiche Weise wie das Werkzeug, ausgestattet ist, insbesondere wobei die Werkstückposition und die Werkzeugposition kombiniert werden, wobei vorzugsweise eine Referenzierung des globalen Koordinatensystems und des lokalen Koordinatensystems hergestellt wird, wobei eine Rückreferenzierung zwischen dem Werkzeug und der Werkstücknavigation durch die Position des Werkzeugs mit der Kamera am Werkstück und die Position des Werkstücks mit der Kamera am Werkzeug hergestellt wird.

10. Werkzeugüberwachungssystem für eine Fertigungsumgebung, wobei die Fertigungsumgebung Folgendes umfasst:
▪ stationäre Objekte und
▪ bewegliche Objekte, umfassend
∘ ein zu fertigendes Werkstück und/oder Teile davon,
∘ ein Werkzeug, das durch einen menschlichen Arbeiter handzuhaben ist, und
ein Werkzeugpositionssystem nach einem der Ansprüche 1 bis 9 für das Werkzeug.

11. Werkzeugüberwachungssystem nach Anspruch 10,
**dadurch gekennzeichnet, dass**
die Fertigungsumgebung mit Folgendem ausgestattet ist:
▪ mehreren globalen Kameras zur Abbildung der Fertigungsumgebung, insbesondere stationären globalen Kameras, und
▪ einem Bildverarbeitungsmittel, das dafür aufgebaut ist, die stationären und beweglichen Objekte in der Fertigungsumgebung zu identifizieren / zu detektieren und ihre globalen Positionskoordinaten in einem globalen Umgebungskoordinatensystem zu bestimmen, insbesondere in wenigstens drei Dimensionen, und
wobei die globalen Positionskoordinaten mit der bestimmten Werkzeugposition abgeglichen werden, wobei insbesondere eine Rückreferenzierung zwischen dem Werkzeug und der Umgebungsnavigation durch die Position des Werkzeugs mit der Kamera in der Umgebung und der Position der Umgebung mit der Kamera am Werkzeug hergestellt wird.

12. Verfahren zur Position eines Handwerkzeugs in einer Fertigungsumgebung, in der ein Werkstück gefertigt wird, insbesondere in einer Umgebung mit mehreren Fertigungsstationen bei der Fahrzeugkarosserie-, Flugzeug- oder Maschinenherstellung, vorzugsweise in einer Montagebandanordnung,
wobei das Werkzeug mit einer Kamera zum Aufnehmen von Bildern ausgestattet ist,
**gekennzeichnet durch**
das Bestimmen einer Werkzeugposition des Werkzeugs durch eine Navigationsberechnung mittels simultaner Positionsbestimmung und Kartenerstellung (SLAM) basierend auf den Bildern von der Kamera am Werkzeug, mit
▪ Bestimmen der Werkzeugposition in Bezug auf ein globales Koordinatensystem in Relation zu der Fertigungsumgebung aus Abschnitten der Bilder von der Kamera am Werkzeug, wobei diese Abschnitte eine Ansicht der Fertigungsumgebung umfassen, und
▪ Bestimmen der Werkzeugposition in Bezug auf ein lokales Koordinatensystem in Relation zu dem Werkstück aus Abschnitten der Bilder von der Kamera am Werkzeug, wobei diese Abschnitte eine Ansicht des Werkstücks umfassen,
insbesondere wobei sich das lokale Koordinatensystem in Bezug auf das globale Koordinatensystem bewegt.

13. Verfahren nach dem vorhergehenden Anspruch 12,
**dadurch gekennzeichnet, dass**
das Bestimmen der Werkzeugposition einen Abgleich der SLAM-Navigation mit bekannten räumlichen Informationen des Werkstücks und/oder der Umgebung, insbesondere räumlichen Informationen in Form von CAD- oder Punktwolkendaten, beinhaltet.

14. Verfahren nach einem der vorhergehenden Ansprüche 12 oder 13,
**gekennzeichnet durch**
ein Erfassen eines Arbeitsprozessparameters durch ein Sensormittel am Werkzeug und ein Bereitstellen der Werkzeugposition zusammen mit dem entsprechenden Arbeitsprozessparameter als Werkzeugüberwachungsdaten durch eine Kommunikationsschnittstelle, insbesondere mit einem Bereitstellen der Überwachungsdaten an ein Fertigungsverwaltungssystem zum Verwalten der Fertigung und/oder zum Dokumentieren der Fertigung des Werkstücks, vorzugsweise zusammen mit einem Bild von der Kamera eines Arbeitsprozessergebnisses an der entsprechenden Werkzeugposition.

15. Computerprogrammprodukt, umfassend einen Programmcode, der auf einem maschinenlesbaren Medium gespeichert ist, oder ein Computerdatensignal, das als elektromagnetische Welle verkörpert ist, zum Ausführen eines SLAM-Navigationsalgorithmus basierend auf Bildern von einer Kamera an einem Werkzeug in einer Fertigungsumgebung, in der ein Werkstück gefertigt wird, vorzugsweise mit einem sich bewegenden Werkstück in einer Montagebandkonfiguration, wobei eine Position des Werkzeugs wie folgt ermittelt wird:
▪ in Bezug auf ein globales Koordinatensystem relativ zur Umgebung durch Abschnitte der Bilder von der Kamera am Werkzeug, wobei diese Abschnitte die Umgebung zeigen, und auch
▪ in Bezug auf ein lokales Koordinatensystem relativ zum Werkstück durch Abschnitte des Bilds von der Kamera am Werkzeug, wobei diese Abschnitte das Werkstück zeigen, im Besonderen zum Berechnen des Verfahrens nach einem der Ansprüche 12 bis 14, das insbesondere in einem Rechenmittel eines Werkzeugpositions- oder -überwachungssystems nach einem der Ansprüche 1 bis 11 ausgeführt wird.

## Revendications

1. Système de localisation d'outil pour un outil portatif dans un environnement de fabrication dans lequel une pièce est fabriquée,
en particulier sur plusieurs postes de fabrication dans une production de carrosseries de voiture, d'avions ou de machines,
dans lequel l'outil mobile manuellement est équipé d'une caméra pour capturer des images,
**caractérisé en ce que**
le système de localisation comprend un moyen d'évaluation numérique qui est conçu pour déterminer une localisation d'outil de l'outil par un calcul de navigation simultaneous location and mapping (SLAM) basé sur les images de la caméra sur l'outil, dans lequel
▪ la localisation d'outil est déterminée par rapport à un système de coordonnées global en relation avec l'environnement de fabrication à partir de parties des images de la caméra sur l'outil, lesquelles parties comprennent une vue de l'environnement de fabrication et
▪ la localisation d'outil est déterminée par rapport à un système de coordonnées local en relation avec la pièce à partir de parties des images de la caméra sur l'outil, lesquelles parties comprennent une vue de la pièce,
en particulier dans lequel le système de coordonnées local est mobile par rapport au système de coordonnées global dans un agencement en chaîne de montage.

2. Système selon la revendication 1,
**caractérisé en ce que**
la détermination de la localisation d'outil implique une mise en correspondance de la navigation SLAM avec des informations spatiales connues de la pièce et/ou de l'environnement, en particulier des informations spatiales sous la forme de données de CAO ou de nuages de points.

3. Système selon la revendication 1 ou 2,
**caractérisé en ce que**
le moyen d'évaluation est conçu pour établir une transition transparente de la localisation d'outil entre le système de coordonnées local et le système de coordonnées global, en particulier par un référencement actualisé en temps réel du système de coordonnées local par rapport au système de coordonnées global.

4. Système selon l'une quelconque des revendications 1 à 3,
**caractérisé en ce que**
l'outil comprend une unité de mesure d'inertie (IMU) et la détermination de la localisation d'outil implique des informations obtenues de l'IMU utilisée dans un algorithme de navigation inertielle.

5. Système selon l'une quelconque des revendications 1 à 4,
**caractérisé en ce que**
l'environnement de fabrication et/ou la pièce comprend de multiples cibles coopératives et/ou émettant activement de la lumière, conçues pour être identifiées dans l'image de caméra, en particulier des faces de contraste, des réflecteurs ou des LED.

6. Système selon l'une quelconque des revendications 1 à 5,
**caractérisé en ce que**
l'outil comprend une interface de communication, en particulier une interface de communication sans fil, de préférence une interface de communication en temps réel, qui est conçue pour échanger ses informations de localisation et/ou d'image avec un système de gestion de fabrication et/ou d'autres outils.

7. Système selon la revendication 6,
**caractérisé en ce que**
l'outil comprend un moyen capteur pour détecter un paramètre de processus de travail d'une opération d'outils et dans lequel le paramètre de processus de travail est fourni avec la localisation d'outil correspondante en tant que données de surveillance d'outil par l'interface de communication, en particulier au système de gestion de fabrication pour gérer et/ou documenter l'historique de fabrication de la pièce, les données de surveillance d'outil comprenant de préférence une image de la caméra qui décrit un résultat du processus de travail de l'opération d'outils.

8. Système selon l'une quelconque des revendications 1 à 7,
**caractérisé en ce que**
l'outil est un outil de montage, en particulier un tournevis, une clé, un outil de serrage ou un outil de rivetage, de préférence un outil électrique à surveillance de couple et/ou de position fonctionnant à l'électricité ou à l'air comprimé, et la caméra a un champ de vision comprenant au moins une partie d'une zone de travail de l'outil.

9. Système selon l'une quelconque des revendications 1 à 8,
**caractérisé en ce que**
la pièce est mobile et est également équipée d'une caméra pour navigation SLAM de la localisation de pièce dans le système de coordonnées global, en particulier de la même manière que l'outil, en particulier dans lequel la localisation de pièce et la localisation d'outil sont combinées, de préférence en établissant un référencement du système de coordonnées global et local,
dans lequel un rétro-référencement entre la navigation de l'outil et de la pièce est établi par la localisation de l'outil avec la caméra sur la pièce et la localisation de la pièce avec la caméra sur l'outil.

10. Système de surveillance d'outil pour un environnement de fabrication,
dans lequel l'environnement de fabrication comprend
▪ des éléments stationnaires et
▪ des éléments mobiles comprenant
o une pièce à fabriquer et/ou des parties de celle-ci,
o un outil devant être manipulé par un opérateur humain et
un système de localisation d'outil selon l'une quelconque des revendications 1 à 9 pour l'outil.

11. Système de surveillance d'outil selon la revendication 10,
**caractérisé en ce que**
l'environnement de fabrication est équipé
▪ de plusieurs caméras globales pour former des images de l'environnement de fabrication, en particulier des caméras globales stationnaires, et
▪ d'un moyen de traitement d'images conçu pour identifier/détecter les éléments stationnaires et mobiles dans l'environnement de fabrication et pour déterminer leurs coordonnées de position globales dans un système de coordonnées d'environnement global, en particulier dans au moins trois dimensions, et
dans lequel les coordonnées de position globales sont mises en correspondance avec la localisation d'outil déterminée, en particulier dans lequel un rétro-référencement entre la navigation de l'outil et de l'environnement est établi par la localisation de l'outil avec la caméra sur l'environnement et la localisation de l'environnement avec la caméra sur l'outil.

12. Procédé de localisation d'un outil portatif dans un environnement de fabrication dans lequel une pièce est fabriquée, en particulier dans un environnement comportant plusieurs postes de fabrication d'une production de carrosseries de voiture, d'avions ou de machines, de préférence dans un agencement en chaîne de montage,
l'outil étant équipé d'une caméra pour capturer des images,
**caractérisé par** les étapes consistant à
déterminer la localisation d'outil de l'outil par un calcul de navigation SLAM (simultaneous location and mapping) basé sur les images de la caméra sur l'outil et
▪ déterminer la localisation d'outil par rapport à un système de coordonnées global en relation avec l'environnement de fabrication à partir de parties des images de la caméra sur l'outil, lesquelles parties comprennent une vue de l'environnement de fabrication et
▪ déterminer la localisation d'outil par rapport à un système de coordonnées local en relation avec la pièce à partir de parties des images de la caméra sur l'outil, lesquelles parties comprennent une vue de la pièce,
en particulier dans lequel le système de coordonnées local est mobile par rapport au système de coordonnées global.

13. Procédé selon la revendication 12 précédente,
**caractérisé en ce que**
l'étape consistant à déterminer la localisation d'outil implique une mise en correspondance de la navigation SLAM avec des informations spatiales connues de la pièce et/ou de l'environnement, en particulier des informations spatiales sous la forme de données de CAO ou de nuages de points.

14. Procédé selon l'une quelconque des revendications 12 ou 13 précédentes,
**caractérisé par** les étapes consistant à
détecter un paramètre de processus de travail par un moyen capteur sur l'outil et fournir la localisation d'outil avec le paramètre de processus de travail correspondant en tant que données de surveillance d'outil par une interface de communication, en particulier à fournir les données de surveillance à un système de gestion de fabrication pour gérer la fabrication et/ou documenter la fabrication de la pièce, de préférence avec une image de la caméra qui décrit un résultat du processus de travail à la localisation d'outil correspondante.

15. Produit programme informatique comprenant un code de programme stocké sur un support lisible par machine, ou signal de données informatiques matérialisé par une onde électromagnétique, pour exécuter un algorithme de navigation SLAM basé sur des images provenant d'une caméra sur un outil dans un environnement de fabrication dans lequel une pièce est fabriquée, de préférence avec une pièce mobile dans une configuration en chaîne de montage, dans lequel une localisation de l'outil est établie
▪ par rapport à un système de coordonnées global relatif à l'environnement par des parties des images de la caméra sur l'outil, lesquelles parties décrivent l'environnement, et aussi
▪ par rapport à un système de coordonnées local relatif à la pièce par des parties de l'image de la caméra sur l'outil, lesquelles parties décrivent la pièce,
en particulier pour mettre en oeuvre le procédé selon l'une des revendications 12 à 14, en particulier exécuté dans un moyen de calcul d'un système de localisation ou de surveillance d'outil selon l'une des revendications 1 à 11.
